## Europäisches Patentamt
## European Patent Office
## Office européen des brevets

(11) Veröffentlichungsnummer: **0 091 702**
**B1**

(12) **EUROPÄISCHE PATENTSCHRIFT**

(45) Veröffentlichungstag der Patentschrift:
23.07.86

(51) Int. Cl.⁴: **F 16 L 41/06**

(21) Anmeldenummer: **83200282.8**

(22) Anmeldetag: **25.02.83**

(54) Rohrabzweig.

(30) Priorität: **08.04.82 DE 3213212**

(43) Veröffentlichungstag der Anmeldung:
**19.10.83 Patentblatt 83/42**

(45) Bekanntmachung des Hinweises auf die Patenterteilung:
**23.07.86 Patentblatt 86/30**

(84) Benannte Vertragsstaaten:
**AT BE CH FR GB IT LI LU NL SE**

(56) Entgegenhaltungen:
**CH-A-624 201**
**GB-A-1 327 151**
**GB-A-2 012 903**
**GB-A-2 080 464**

(73) Patentinhaber: **REHAU AG + Co, Rheniumhaus,
D-8673 Rehau (DE)**

(72) Erfinder: **Baumgärtel, Christof, Schornbaumstrasse
2, D-8520 Erlangen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Rohrabzweig mit einer zwischen dem äußeren Umfang einer Rohrleitung aus thermoplastischem Kunststoff und zugeordneten Auflageflächen des Abzweigstückes angeordneten, ringförmigen Dichtung, welche in eine Nutenöffnung des Abzweigstückes eingreift und die Abzweigöffnung der Rohrleitung gegen das Abzweigstück abdichtet, wobei an der Basis des Abzweigstückes gegenüber dessen freiem Ende oberhalb der Abzweigöffnung der Rohrleitung ein umlaufender, ringförmiger Vorsprung angeformt ist, auf dem sich der umlaufende Rand einer Buchse abstützt.

Derartige Abzweigstücke sind aus Werkstoffen wie Stahl, Guß, Asbestzement und Polyvinylchlorid hart bekannt. Sie werden dazu benötigt, um an bestehende Rohrleitungen nachträglich Anschlüsse, z.B. für die Wasseroder Gasversorgung von Häusern, anbringen zu können.

Aus der CH Patentschrift 589 250 ist ein Rohrabzweig bekannt, der aus zwei miteinander verbindbaren Halbschalen besteht, welche um das Basisrohr gelegt und mittels Klampen fest gegeneinander verspannt werden. Der Innendurchmesser des Rohrabzweigs ist dabei dem jeweiligen Außendurchmesser des Basisrohres angepaßt und so dimensioniert, daß beim Aufsetzen der Klampen ein ausreichend fester Sitz auf dem Basisrohr erzielt wird, ohne daß es dabei zu Überbeanspruchungen des Basisrohres kommt. Zur Vermeiding solcher Überbeanspruchungen werden an definierten Stellen zwischen dem Rohrabzweig und dem Basisrohr elastische Dichtungen, z.B. aus Gummi, vorgesehen.

In einer der beiden Halbschalen des Rohrabzweigs ist eine Anschlußöffnung für das abgehende Rohr eingebracht. Um diese Anschlußöffnung herum ist am inneren Umfang der betreffenden Halbschale die Dichtung angeordnet, die den Spalt zwischen dem Rohrabzweig und dem Basisrohr abdichtet. Diese Dichtung kann verschiedene Formen aufweisen, z.B. O-Ringdichtungen, Flachdichtungen, Lippendichtungen usw. Die Wahl der Dichtungsform hängt u.a. von der Stabilität des Basisrohres ab, in welches über die Anschlußöffnung des Rohrabzweigs ein Loch eingebohrt werden soll.

Bei der Verwendung von Flachdichtungen wird beispielsweise während des Zusammenpressens der beiden Halbschalen durch den Rohrabzweig ein sehr hoher Preßdruck auf das Basisrohr erforderlich, um auf Dauer eine Abdichtung zu erreichen. Derartige hohe Verpressungen sind zulässig bei Basisrohren aus Gußeisen, Stahl und - eingeschränkt - auch bei Asbestzement-Rohren. Besteht das Basisrohr aus Kunststoff, z.B. aus Polyvinylchlorid hart, wird im allgemeinen mit Lippendichtungen oder definiert verpreßbaren Profildichtungen gearbeitet, die nur eine relativ geringe Druckspannung an das Rohr weiterleiten.

Um eine dichte Verbindung zu erreichen, ist in allen geschilderten Fällen ein Mindestdruck des Dichtringes auf das Basisrohr erforderlich. So können z.B. O-Ringdichtungen bei Basisrohren aus Polyvinylchlorid hart verwendet werden, da diese Dichtungen einen hohen spezifischen Druck an der Dichtungsstelle erzeugen, ohne daß die Gesamtdruckkräfte aus der Verpressung des Dichtringes in unvertretbar kurzer Zeit ein das Basisrohr negativ beeinflussendes unzulässiges Maß erreichen. Besteht das Basisrohr jedoch aus sehr elastischen Kunststoffen, wie z.B. Polyäthylen hart, ist die Möglichkeit nicht auszuschließen, daß durch den Druck des Gummidichtrings in relativ kurzer Zeit Rohrverformungen im Bereich der Anbohrung des Basisrohres auftreten, da hier das Basisrohr durch die Anbohrung geschwächt ist. Dies kann beim Zusammenpressen der beiden Halbschalen des Rohrabzweigs aufgrund der verhältnismäßig hohen Elastizität des Kunststoffes zu örtlichen Verformungen und darüberhinaus zum Wegfließen des Rohrmaterials in den Bereich der Anbohrung führen, wodurch im Laufe der Zeit eine Undichtigkeit des Rohrabzweigs entstehen kann. Darüber hinaus kann der Rohrabzweig locker werden, wodurch bei Bodenbewegungen des Rohrabzweigs gegenüber der Anbohrung im Basisrohr eine Verringerung des Durchflußquerschnitts möglich werden kann.

Um diese Schwierigkeiten zu umgehen, wurden bei Basisrohren aus sehr elastischen Kunststoffen, z.B. Rohren aus Polyäthylen oder Polypropylen, aufschweißbare Rohrabzweige bzw. Aufschweißstutzen entwickelt. Diese Schweißverbindungen erzeugen jedoch im Anbohr bereich Schrumpfspannungen beim Abkühlvorgang nach dem Schweißen, was wiederum zu erhöhten, Spannungen im Rohr und damit zu einer Verringerung der Lebensdauer an dieser Stelle führt.

Aus der deutschen Patentschrift 21 08 155 ist ferner eine Rohrleitung mit auf klemmbarem Abzweigverbindungsstück bekannt, bei dem eine spezielle Lippendichtung verwendet wird. Diese Lippendichtung besteht aus einem ringförmigen Profilkörper, welcher in einer Nut der oberen Halbschale des Rohrabzweigs gehaltert ist. An diesem Profilkörper sind beidseitig gleichgerichtete, im Querschnitt gegenüber dem Profilkörper verschwächte Dichtlippen angeformt, welche mit senkrecht von der Lippenlängsachse aufstehenden Vorsprüngen versehen sind. Diese Vorsprünge nehmen beim Verpressen der Halbschalen auf dem Basisrohr die dabei entstehenden Preßkräfte auf und sollen somit schonend auf das elastische Basisrohr einwirken. Der Nachteil ist jedoch darin zu sehen, daß auch hier eine kritische Preßgrenze nicht unter Kontrolle zu bringen ist. Vielmehr wird beim Überschreiten eines gewissen Anpreßdruckes der aus dem Stand der Technik bekannte Nachteil bei Verwendung elastischer Kunststoffmaterialen für das Basisrohr eintreten, d.h., das Basisrohr wird im Bereich der Anbohrung verformt bzw. durch Verfließen des elastischen Kunststoffes in diesem Bereich verschwächt. Die Folgen sind auch hier Undichtigkeit und Lockerwerden der Verbindung.

Aus der US-Patentschrift 2 567 639 ist eine Abzweigverbindung bei Abflußrohren bekanntgeworden, bei der sich ein Rohrstutzen mit einem Ringbund auf einer Schulter des Abzweigteilstückes abstützt und mit seinem Stutzenteil selbst in die Abzweigöffnung der Rohrleitung eingreift. Dieser Rohrstutzen muß durch eine umständlich anzuordnende Dichtpackung in seinem Sitz im Abzweigteilstück gehaltert werden, wobei die eigentliche Dichtpackung zwischen Abzweigteilstück und Abzweigrohr mit einer Bleifüllung endpositioniert wird.

Hier setzt die Erfindung ein, die es sich zur Aufgabe gestellt hat, die Nachteile der bekannten Rohrabzweige beim Einsatz von elastischen Basisrohren, deren Rohrwandmaterial unter Druckbelastung zum Kriechen neigt, zu vermeiden.

Erfindungsgemäß wird dazu vorgeschlagen, daß die Buchse als Haltebuchse einen Schaft aufweist, der in die Abzweigöffnung der Rohrleitung eingesetzt ist und den Wandquerschnitt der Rohrleitung mit einem Gewinde durchdringt.

Der Vorteil der erfindungsgemäßen Haltebuchse wird darin gesehen, daß die Haltebucshe mit dem an ihrem Äußeren Umfang eingelassenen Gewinde beim Einsetzen in die Abzweigöffnung mit deren Durchschnittswandung in Wirkverbindung tritt. Das Gewinde der Haltebuchse kann ein selbstschneidendes Gewinde sein. Es sind jedoch auch solche Gewinde einsetzbar, die in ein vorgeformtes Gewinde, welches in die Querschnittwandung der Abzweigöffnung eingeformt ist, eingreifen.

Es erscheint im Rahmen der Erfindung zweckmäßig, daß die durch den kragenförmigen Bund des Abzweigstückes begrenzte Öffnung im Durchmesser größer ist als die Abzweigöffnung der Rohrleitung. Auf diese Weise wird beim Einsetzen der Haltebuchse das an deren äußerem Umfang angeordnete Gewinde beim Einlassen in die Rohröffnung nicht verletzt. Die Haltebuchse selbst kann aus Metall oder Kunststoff sein.

Mit der Haltebuchse wird eine Verformung bzw. ein Wegfließen des Kunststoffes des Basisrohres im Bereich der Abzweigöffnung und im Bereich der Abdichtung verhindert. Die über die Gewindeverbindung fest mit der Querschnittswandung der Abzweigöffnung verbundene Haltebuchse verhindert ein Ausweichen des Rohrwandmaterials ins Rohrinnere bei der Herstellung und der Beibehaltung der Dichtverbindung. Darüberhinaus wird durch das Kraftwirken des Schraubgewindes am Außenumfang der Haltebuchse die Wandung des Rohres um die Abzweigöffnung fest an das Abzweigstück angezogen, wodurch eine zusätzliche Abdichtwirkung über das elastische Rohrwandmaterial erzielt wird. Die Verpressung der Dichtung auf dem Äußeren Umfang des Basisrohres im Bereich der Abzweigöffnung kann somit gefahrlos vorgenommen werden, wobei für die Dichtung alle bekannten Querschnitte verwendet werden können.

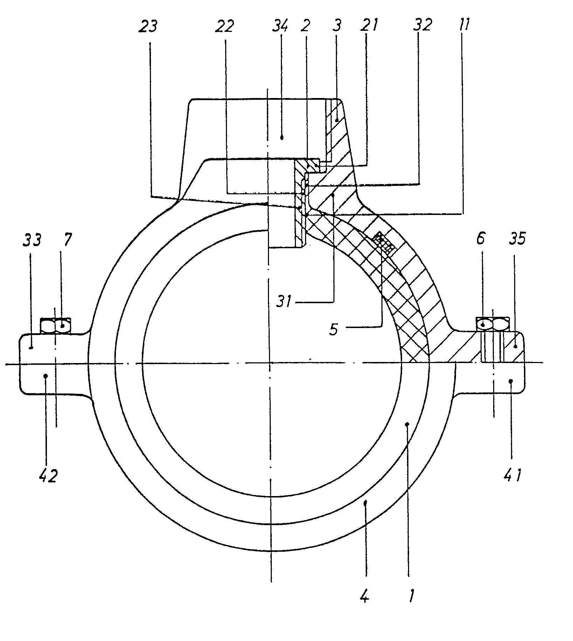

In der Zeichnung ist ein Ausführungsbeispiel des erfindungsgemäßen Rohrabzweigs im Teilschnitt dargestellt. Das Basisrohr 1 ist dabei von dem aus zwei Halbschalen 3, 4 bestehenden Rohrabzweig umgeben, wobei die feste Verbindung zwischen den beiden Halbschalen 3, 4 über die an den Flanchen 35, 41 und 33, 42 angreifenden Verbindungsschrauben 6, 7 herbeigeführt wird. Die Abdichtung erfolgt dabei durch den schematisch angedeuteten Dichtring 5. Die lichte Öffnung 34 des Abzweigstückes 3 an der Halbschale ist dabei über der Abzweigöffnung 11 in der Rohrleitung 1 angeordnet. In die lichte Öffnung 34 des Abzweigstückes 3 greift der ringförmige Vorsprung 31 derart ein, daß die durch den ringfümigen Vorsprung 31 begrenzte Öffnung 32 im Durchmesser, größer gehalten ist als die Abzweigöffnung 11 der Rohrleitung 1.

Im Teilschnitt dargestellt ist die Haltebuchse 2, die sich mit ihrem kragenförmigen Bund 21 auf der Oberfläche des ringförmigen Vorsprungs 31 des Abzweigstücks an der Halbschale 3 abstützt. Die Haltebuchse 2 besitzt in der Darstellung an ihrem Schaft 23 ein Außengewinde 22, welches in die Querschnittswandung der Abzweigöffnung 11 eingedreht ist und mit diesen Wandbereichen umf angsmäßig in Wirkverbindung steht.

Der Rohrabzweig ist zum Einsatz bei Basisrohren aus thermoplastischem Kunststoff mit verhätnismäßig hoher Elastizität gedacht. Er kann jedoch auch bei Basisrohren aus anderen Grundmaterialien verwendet werden.

## Patentansprüche

1. Rohrabzweig mit einer zwischen dem äußeren Umfang einer Rohrleitung (1), aus thermoplastischem Kunststoff und zugeordneten Auflageflächen des Abzweigstückes (3, 4) angeordneten, ringförmigen Dichtung (5), in welche eine Nutenöffnung des Abzweigstückes eingreift und die Abzweigöffnung (11) der Rohrleitung (1) gegen das Abzweigstück (3, 4) abdichtet, wobei an der Basis des Abzweigstückes gegenüber dessen freiem Ende oberhalb der Abzweigöffnung der Rohrleitung ein umlaufender, ringförmiger Vorsprung (31) angeformt ist, auf dem sich der umlaufende Rand einer Buchse, (2) abstützt, dadurch gekennzeichnet, daß die Buchse als Haltebuchse (2) einen Schaft (23) aufweist, der in die Abzweigöffnung (11) der Rohrleitung (1) eingesetzt ist und den Wandquerschnitt der Rohrleitung (1) mit einem Gewinde (22) durchdringt.

2. Rohrabzweig nach Anspruch 1, dadurch gekennzeichnet, daß das Außengewinde (22) der Haltebuchse (2) ein selbstschneidendes Gewinde ist.

## Revendications

Piquage avec un joint annulaire (5) disposé entre le pourtour d'une tuyauterie (1) en matière thermoplastique et des faces d'appui affectées du raccord en T (3, 4), joint qui avance dans une ouverture à encoche du raccord et étanche l'ouverture de raccordement (11) de la tuyauterie (1) à l'encontre du raccord (3, 4), une saillie (31) circulaire, annulaire étant formée à la base du raccord en regard de son bout libre au-dessus de l'ouverture de raccordement de la tuyauterie, sur laquelle saillie a'appuie le collet circulaire d'un manchon (2), caractérisé par le fait que le manchon présente en tant que manchon de retenue (2) une tige (23) qui est logée dans l'ouverture de raccordement (11) de la tuyauterie (1) et pénètre avec un filet (22) dans la section de paroi de la tuyauterie (1).

2. Piquage suivant revendication 1, caractérisé par le fait que le filet extérieur (22) du manchon de retenue (2) est un filet auto-taraudeur.

## Claims

1. Pipe junction with an annular seal (5) made of thermoplastic material located between the outer periphery of a pipeline (1) and the co-related bearing surfaces of a branch fitting (3, 4) and which engages in the groove opening of the branch fitting, thus sealing the branch opening (11) of the pipelins (1) against the branch fitting (3, 4) whereby at the base of the branch fitting there is located opposite the free end of the said fitting above the branch opening an integrate-moulded circumferential, annular shoulder (31) serving to support the circumferential edge of a bush (2) characterised in that the bush in the capacity of a locking bush (2) is provided with a shaft (23) which is fitted into the branch opening (11) of the pipeline (1) and by means of a thread (22) penetrates through the wall cross-section of the pipeline (1).

2. Pipe junction in accordance with Claim 1 characterised in that the male thread (22) of the locking bush (2) is a self-cutting thread.